# EUROPÄISCHE PATENTSCHRIFT

(11) **EP 3 898 300 B1**
(45) Veröffentlichungstag und Bekanntmachung des Hinweises auf die Patenterteilung: **12.03.2025**
(21) Anmeldenummer: 19832027.7
(22) Anmeldetag: 16.12.2019
(51) Int. Cl.: B60H 1/22, B60H 1/00, B60H 1/32

(54) **VERFAHREN ZUM BETRIEB EINES KLIMATISIERUNGSSYSTEMS FÜR EIN FAHRZEUG**
METHOD FOR OPERATING AN AIR-CONDITIONING SYSTEM FOR A VEHICLE
PROCÉDÉ POUR FAIRE FONCTIONNER UN SYSTÈME DE CLIMATISATION D'UN VÉHICULE

(30) Priorität: 17.12.2018 DE 102018132423
(43) Veröffentlichungstag der Anmeldung: 27.10.2021
(73) Patentinhaber: VOLKSWAGEN AG, 38440 Wolfsburg (DE)
(72) Erfinder: ALBRECHT, Jan-Christoph, 38442 Wolfsburg (DE); WESTHÄUSER, Jochen, 38102 Braunschweig (DE); WACHSMUTH, Carsten, 38179 Schwülper (DE)
(74) Vertreter: Gulde & Partner
(86) Internationale Anmeldenummer: PCT/EP2019/085253
(87) Internationale Veröffentlichungsnummer: WO 2020/126982

(56) Entgegenhaltungen:
- DE-A1- 102010 020 321
- DE-A1- 102017 104 646
- DE-A1- 102017 206 135
- DE-T5- 112016 003 261
- FR-A1- 3 026 172
- US-A1- 2011 016 896
- US-A1- 2014 069 123

## Beschreibung

Die Erfindung betrifft ein Verfahren zum Betrieb eines Klimatisierungssystems für ein Fahrzeug, ein Steuergerät und ein Fahrzeug.

Im Bereich von Fahrzeugen, beispielsweise Kraftfahrzeugen, kommen Wärmeübertrager vielfältig zum Einsatz, beispielsweise zur Klimatisierung des Fahrzeuges. In dieser Funktion ist es bekannt, Wärmeübertrager als Teil einer Wärmepumpe vorzusehen, mit der zur Klimatisierung des Fahrzeuges Wärme aus der Außenluft gewonnen wird. Dieses Konzept eignet sich besonders gut für Elektrofahrzeuge, um die Reichweite gegenüber einer elektrischen Beheizung zu erhöhen.

Allerdings besteht bei derartigen Wärmepumpen das Problem, dass bei geringen Außentemperaturen, beispielsweise von -4 °C oder weniger, der Wärmeübertrager zur Vereisung neigt, da dieser zum Erreichen einer für die Wärmeübertragung notwendigen Temperaturdifferenz sehr kalt sein muss. In der Folge wird nach einiger Zeit eine Abtauung des Wärmeübertragers notwendig, die wiederum sehr energieintensiv sein kann. Diese ist konventionell aber notwendig, um das angelagerte Eis, welches die Effizienz der Wärmeübertragung beeinträchtigt, wieder zu entfernen.

Die DE 10 2012 109 483 A1 offenbart ein Verfahren zur Regelung eines Energieversorgungssystems. Dabei wird bestimmt, welche Stellgrößen aus einer Menge von Stellgrößen eine energieeffizientere Regelung eines Wärmetransportmediums ermöglichen. Dann erfolgt eine Regelung eines Wärmetauschprozesses zunächst anhand der als energieeffizienter bestimmten Stellgröße. Die als nicht energieeffizienter bestimmte Stellgröße wird erst dann zur Regelung des Wärmetauschens herangezogen wird, wenn das Regelziel mit der als energieeffizienter bestimmten Stellgröße allein nicht erreicht werden kann.

US 2014 / 0 069 123 A1, FR 3 026 172 A1, DE 10 2010 020 321 A1 offenbaren jeweils Verfahren zum Betrieb eines Klimatisierungssystems für ein Fahrzeug, bei dem versucht wird, eine Vereisung eines Außenluftwärmeträgers zu vermeiden. Es ist angesprochen, dass das Betreiben der Wärmepumpe mit einer Fluidtemperatur erfolgen kann, bei der der Taupunkt nicht unterschritten wird.

DE 10 2017 206 135 A1, DE 10 2017 104 646 A1, DE 11 2016 003 261 T5 und US 2011 / 0 016 896 A1 offenbaren Verfahren zum Betrieb eines Temperierungssystems für ein Fahrzeug, in denen angesprochen ist, eine Wärmepumpe mit einer Fluidtemperatur zu betreiben, bei der der Taupunkt unterschritten wird.

Der Erfindung liegt nun die Aufgabe zugrunde, eine technische Lösung zu finden, mit der eine Klimatisierung eines Fahrzeuges in ineffizienten Betriebszuständen vermieden wird.

Die Aufgabe wird durch die Gegenstände der unabhängigen Patentansprüche 1, 8 und 9 gelöst. Weitere bevorzugte Ausgestaltungen der Erfindung ergeben sich aus den übrigen, in den Unteransprüchen genannten Merkmalen.

Ein erster Aspekt der Erfindung betrifft ein Verfahren zum Betrieb eines Klimatisierungssystems für ein Fahrzeug, wobei das Klimatisierungssystem umfasst:
- eine Wärmepumpe mit einem Außenluftwärmeübertrager; und
- eine weitere Heizwärmequelle für einen Innenraum des Fahrzeuges;

wobei das Verfahren folgende Schritte umfasst:
   - Ermittlung eines Heizleistungsbedarfs zur Klimatisierung des Fahrzeuges;
   - Ermittlung einer hierfür benötigten Wärmeleistungsaufnahme am Außenluftwärmeübertrager;
   - Ermittlung eines Außenluftzustandes;
   - Ermittlung einer im Außenluftwärmeübertrager für die benötigte Wärmeleistungsaufnahme erforderlichen Fluidtemperatur;
   - Ermittlung, ob ein Taupunkt der Außenluft am Außenluftwärmeübertrager bei der erforderlichen Fluidtemperatur unterschritten wird; und dann
   - Auswahl einer Betriebsstrategie für das Klimatisierungssystem anhand von Kriterien, die zumindest die Deckung des Heizleistungsbedarfs, die Außenlufttemperatur und eine Gesamtenergieeffizienz des Klimatisierungssystems umfassen, mittels eines Steuergerätes des Fahrzeugs aus einer Gruppe, die zumindest die folgenden Betriebsstrategien umfasst:
      b) teilweise Deckung des Heizleistungsbedarfs durch Betreiben der Wärmepumpe mit einer Fluidtemperatur, bei der der Taupunkt nicht unterschritten wird, und ergänzende Deckung des Heizleistungsbedarfs durch Betreiben der weiteren Heizwärmequelle;
      c) temporäre teilweise Deckung des Heizleistungsbedarfs durch Betreiben der Wärmepumpe mit einer Fluidtemperatur, bei der der Taupunkt unterschritten wird, und ergänzende Deckung des Heizleistungsbedarfs durch Betreiben der weiteren Heizwärmequelle, gefolgt von einer Abtauphase des Außenluftwärmeübertragers;
      d) temporäre Deckung des Heizleistungsbedarfs durch Betreiben der Wärmepumpe mit einer Fluidtemperatur, bei der der Taupunkt unterschritten wird, gefolgt von einer Abtauphase des Außenluftwärmeübertragers;
wobei, die Betriebsstrategie mit der größten Gesamteffizienz, die den Heizleistungsbedarf deckt, ausgewählt wird.

Mit anderen Worten werden die Gesamtenergieeffizienzen für die von der Gruppe umfassten Betriebsstrategien ermittelt und die Betriebsstrategie mit der größten Gesamteffizienz, die den Heizleistungsbedarf deckt, ausgewählt.

Dadurch, dass die Betriebsstrategie auf diese Weise ausgewählt wird, ist vorteilhaft eine Deckung des Heizleistungsbedarfs sichergestellt und durch Abstimmung einer Nutzung der verfügbaren Wärmequellen aufeinander, nämlich der Außenluft und der weiteren Wärmequelle, immer ein Betrieb des Klimatisierungssystems im Bereich der größten Effizienz ermöglicht. Dies wird insbesondere auch dadurch erreicht, dass durch Kombination, beispielsweise eines Betriebs der Wärmepumpe unter Vereisungsbedingungen mit einem Betrieb einer elektrischen Heizwärmequelle, die für sich isoliert betrachtet effizienzungünstig sein können, zugelassen werden. Hierbei kommt es darauf an, dass diese Kombinationen sich hinsichtlich der Gesamteffizienz im Laufe des Verfahrens gegenseitig ausgleichen. Somit wird unter bestimmten Bedingungen eine Gesamteffizienz erreichbar, die über der erreichbaren Gesamteffizienz liegt, wenn beispielsweise nur die Wärmepumpe oder nur die weitere Heizwärmequelle zur Deckung des Heizleistungsbedarfs genutzt werden würde.

Als Gesamtenergieeffizienz wird im Zusammenhang mit der Erfindung das Verhältnis aus aufgenommener elektrischer Energie eines Verdichters der Wärmepumpe zu zur aufgenommenen Energie der weiteren Heizwärmequelle, beispielsweise elektrischer Energie, bezeichnet.

Der Heizleistungsbedarf zur Klimatisierung wird beispielsweise in bekannter Weise auf einer Soll- und Ist-Temperatur im Fahrzeug ermittelt. Dabei können je nach gewünschter Genauigkeit in bekannter Weise auch weitere Faktoren berücksichtigt werden, wie beispielsweis ein Luftfassungsvolumen des Fahrzeuges oder auch eine Wärmekapazität der Luft.

Zur Ermittlung des Außenluftzustandes werden beispielsweise in bekannter Weise Temperatur und Feuchtigkeit der Außenluft bestimmt und daraus ein Taupunkt abgeleitet. Die Relevanz des Taupunkts in dem erfindungsgemäßen Verfahren besteht insbesondere darin, dass diese angibt, ob sich Eis auf dem Außenluftwärmeübertrager abscheidet oder nicht.

Hinsichtlich der erforderlichen Fluidtemperatur im Außenluftwärmeübertrager wird der Fachmann aufgrund der hier offenbarten Lehre erkennen, dass beispielsweise eine Einströmtemperatur des Fluids in den Außenluftwärmeübertrager eine zweckmäßige Referenz darstellt und dessen Strömungsgeschwindigkeit zu berücksichtigen ist.

Die genannte Abtauphase des Außenluftwärmeübertragers kann beispielsweise durch eine Umkehr des Wärmepumpenprozesses erreicht werden oder auch durch aktive oder passive Zuführung von Wärme, worauf später noch näher eingegangen wird.

Vorzugsweise umfasst die verwendete weitere Heizwärmequelle eine elektrische Heizwärmequelle. Elektrische Wärmequellen zählen für sich genommen bekanntermaßen zu den weniger effizienten Wärmequellen, was in dem erfindungsgemäßen Verfahren aber durch die beschriebenen Synergieeffekte vorteilhaft ausgeglichen und sogar überkompensiert wird.

Vorzugsweise ist das verwendete Klimatisierungssystem für ein Elektrofahrzeug vorgesehen, da sich die erhöhte Energieeffizienz hier besonders vorteilhaft auf die Reichweite auswirkt.

In bevorzugter Ausgestaltung des Verfahrens der Erfindung ist vorgesehen, dass die Gruppe als weitere Betriebsstrategie umfasst: a) Deckung des Heizleistungsbedarfs durch Betreiben der Wärmepumpe mit einer Fluidtemperatur, bei der der Taupunkt nicht unterschritten wird.

Unter geeigneten Bedingungen kann somit auch auf einen Betrieb der Wärmepumpe allein zurückgegriffen werden, ohne dass eine Vereisungsgefahr besteht.

In weiterhin bevorzugter Ausgestaltung des Verfahrens der Erfindung ist vorgesehen, dass die Gruppe als weitere Betriebsstrategie umfasst: c) temporäre teilweise Deckung des Heizleistungsbedarfs durch Betreiben der Wärmepumpe mit einer Fluidtemperatur, bei der der Taupunkt unterschritten wird, und ergänzende Deckung des Heizleistungsbedarfs durch Betreiben der weiteren Heizwärmequelle, gefolgt von einer Abtauphase des Außenluftwärmeübertragers.

Auf diese Weise kann die Vereisung des Außenluftwärmeübertragers verlangsamt werden und die Notwendigkeit für eine Abtauphase verzögert werden.

In weiterhin bevorzugter Ausgestaltung des Verfahrens der Erfindung ist vorgesehen, dass in Betriebsstrategie c) oder d) in der Abtauphase die Deckung des Heizleistungsbedarfs durch Betreiben der weiteren Heizwärmequelle erfolgt.

Auf diese Weise wird die Abtauphase vorteilhaft überbrückt und Komforteinbußen vermieden.

In weiterhin bevorzugter Ausgestaltung des Verfahrens der Erfindung ist vorgesehen, dass für das Abtauen des Außenluftwärmeübertragers Wärme der weiteren Heizwärmequelle verwendet wird.

Auf diese Weise kann das Abtauen vorteilhaft auch ohne Umkehr des Wärmepumpenprozesses erfolgen. Wird zusätzlich der Wärmepumpenprozess umgekehrt, kann die Wärme der weiteren Heizwärmequelle der daraus resultierenden Kühlwirkung der Umkehr des Wärmepumpenprozesses vorteilhaft entgegenwirken, so dass spürbare Schwankungen in der Klimatisierung des Fahrzeuges vermieden werden.

Erfindungsgemäß ist vorgesehen, dass in Betriebsstrategie c) anhand einer Benutzerinformation und eines Vereisungsmodells eine Simulation, eine prädiktive Regelung oder die Verwendung eines Kennfeldes erfolgt, wobei ermittelt wird, wann der Heizleistungsbedarf entfällt und dann eine teilweise Deckung des Heizleistungsbedarfs durch Betreiben der Wärmepumpe mit einer Fluidtemperatur erfolgt, bei der der Taupunkt unterschritten wird, und eine ergänzende Deckung des Heizleistungsbedarfs durch Betreiben der weiteren Heizwärmequelle erfolgt, so dass diese Betriebsstrategie bis zum Entfall des Heizleistungsbedarfs zu einer Maximierung der Gesamteffizienz führt.

Die Benutzerinformation kann beispielsweise eine Navigationsinformation über die Dauer des Heizleistungsbedarfs, beispielsweise in Form einer mit dem Fahrzeug zurückzulegenden Strecke, sein oder auch eine Klimatisierungseinstellung umfassen. In der Simulation kann dann beispielsweise ermittelt werden, wann das Fahrzeug abgestellt werden soll und somit keine Klimatisierung mehr erforderlich ist. Darauf aufbauend kann in der Simulation beispielsweise ermittelt werden, welche Menge an Heizleistung durch die Wärmepumpe unter Vereisungsbedingungen bereitgestellt werden kann, bis der Heizleistungsbedarf entfällt, und welche Menge durch die weitere Heizwärmequelle bis zur Deckung des gesamten Heizleistungsbedarfs ergänzt werden muss, so dass bis beispielsweise zum Erreichen des Zielorts eine höchstmögliche Gesamteffizienz gegeben ist.

Das Abtauen des Außenluftwärmeübertragers kann so in einen Zeitraum verlagert werden, in dem keine Klimatisierung erforderlich ist. Somit kann das Abtauen beispielsweise auch passiv erfolgen, durch Einplanung einer Ruhephase des Klimatisierungssystems nach der Nutzung. Die Vereisung des Außenluftwärmeübertragers wird so während des Betriebs des Klimatisierungssystems, beispielsweise während der Fahrt, vorteilhaft verlangsamt jedoch grundsätzlich zugelassen.

In weiterhin bevorzugter Ausgestaltung des Verfahrens der Erfindung ist vorgesehen, dass in Betriebsstrategie c) oder d) anhand einer Benutzerinformation und eines Vereisungsmodells eine Simulation erfolgt, wann der Heizleistungsbedarf entfällt und eine Deckung des Heizleistungsbedarfs bis zum Entfall des Heizleistungsbedarfs durch Betreiben der Wärmepumpe mit einer Fluidtemperatur erfolgt, bei der der Taupunkt unterschritten wird.

Im Unterschied zu der vorangehend beschriebenen Ausgestaltung des Verfahrens erfolgt die Abtauung beispielsweise außerhalb des Betriebs des Fahrzeuges und kann somit sehr langsam und effizient erfolgen oder sogar mit Hilfe von Energie, die von einer Ladesäule bereitgestellt wird. In dieser Ausgestaltung wird beispielsweise geprüft, ob unter gegebenen Bedingungen eine Vereisung des Außenluftwärmeübertragers zugelassen werden kann, wenn dies bis beispielsweise zum Ende der Fahrt dennoch zu einer höchstmöglichen Gesamteffizienz führt.

Der effiziente Wärmepumpenbetrieb kann den Heizleistungsbedarf allein decken. Auch hier kann das Abtauen in den Zeitraum verlagert werden, in dem keine Klimatisierung mehr erforderlich ist.

In weiterhin bevorzugter Ausgestaltung des Verfahrens der Erfindung ist vorgesehen, dass die benötigte Wärmeleistungsaufnahme mehrfach aktualisiert wird und die Wahl der Betriebsstrategie angepasst wird.

Dabei kann sich ergeben, dass die bereits gewählte Betriebsstrategie permanent die Kriterien erfüllt. Andernfalls kann ein Wechsel der Betriebsstrategie erfolgen. Angemerkt sei auch, dass die Benennung der Betriebsstrategien mit a) bis d) keine Reihen- oder Rangfolge impliziert, sondern die Betriebsstrategien stets verglichen werden und anhand der genannten Kriterien die aktuell geeignetste Betriebsstrategie ausgewählt wird.

Somit erlaubt es das Verfahren der Erfindung, auch unter sich ändernden Bedingungen stets die beste Betriebsstrategie zu fahren.

Ein zweiter Aspekt der Erfindung betrifft ein Steuergerät, eingerichtet zur Durchführung eines Verfahrens gemäß der vorhergehenden Beschreibung.

Ein dritter Aspekt der Erfindung betrifft ein Fahrzeug, umfassend ein Klimatisierungssystem mit einer Wärmepumpe, einem Außenluftwärmeübertrager und eine weitere Heizwärmequelle für einen Innenraum des Fahrzeuges sowie umfassend ein Steuergerät gemäß der vorhergehenden Beschreibung.

Insbesondere kann das Fahrzeug die im Zusammenhang mit dem Verfahren der Erfindung beschriebenen technischen Mittel umfassen und Ausprägungen annehmen, wie im Zusammenhang mit dem Verfahren der Erfindung offenbart ist. Das Steuergerät kann entsprechend eingerichtet sein und eine für das Verfahren der Erfindung ausgelegte Steuerungssoftware umfassen.

Die verschiedenen, in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: ein Klimatisierungssystem und ein erfindungsgemäßes Steuergerät in einem erfindungsgemäßen Fahrzeug; und
- Figur 2: eine schematische Darstellung einer Anwendung von Kriterien zur Auswahl einer Betriebsstrategie.

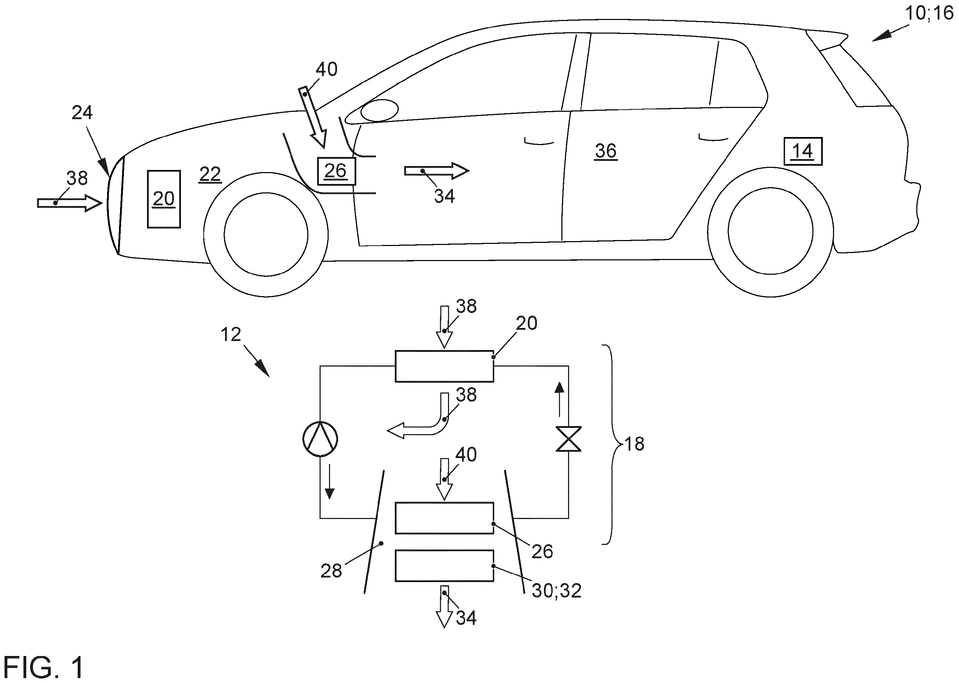

Figur 1 zeigt im oberen Teil eine exemplarische Ausführungsform eines erfindungsgemäßen Fahrzeuges 10 mit Klimatisierungssystem 12 und einem erfindungsgemäßen Steuergerät 14. Das Fahrzeug 10 ist hier ein Elektrofahrzeug 16.

Im unteren Teil von Figur 1 ist das Klimatisierungssystem 12 prinziphaft dargestellt.

Das Klimatisierungssystem 12 des Elektrofahrzeuges 16 umfasst eine Wärmepumpe 18. Die Wärmepumpe 18 hat einen Außenluftwärmeübertrager 20, der als Verdampfer betreibbar ist.

Dieser ist in einem Motorraum 22 des Elektrofahrzeuges 16 hinter einem Kühlergrill 24 angeordnet. Weiterhin umfasst die Wärmepumpe 18 einen Innenluftwärmeübertrager 26, der als Kondensator/Gaskühler betreibbar ist.

Der Innenluftwärmeübertrager 26 ist in einem Ausströmkanal 28 angeordnet. In dem Ausströmkanal 28 ist auch eine weitere Heizwärmequelle 30 vorgesehen, die vorliegend eine elektrische Heizwärmequelle 32 umfasst.

Durch den Ausströmkanal 28 kann Luft 34 in einen Innenraum 36 des Elektrofahrzeuges 16 einströmen, die zuvor als Zuluft 40 aus der Umgebung oder dem Innenraum 36 des Elektrofahrzeuges 16 angesaugt worden ist.

Durch den Kühlergrill 24 strömt Außenluft 38 in den Motorraum 22 ein und wird entlang des Außenluftwärmeübertragers 20 geleitet.

In der Außenluft 38 gespeicherte Wärme kann über den Außenluftwärmeübertrager 20 in die Wärmepumpe 18 gelangen und als Heizleistung über den Innenluftwärmeübertrager 26 an die Zuluft 40 abgegeben werden. Ferner kann die elektrische Heizwärmequelle 32 elektrisch Wärme erzeugen und ebenfalls an die Zuluft 40 abgeben.

Das Steuergerät 14 in dem Elektrofahrzeug 16 ist dazu eingerichtet, das Klimatisierungssystem 12 in der erfindungsgemäßen Weise zu betreiben.

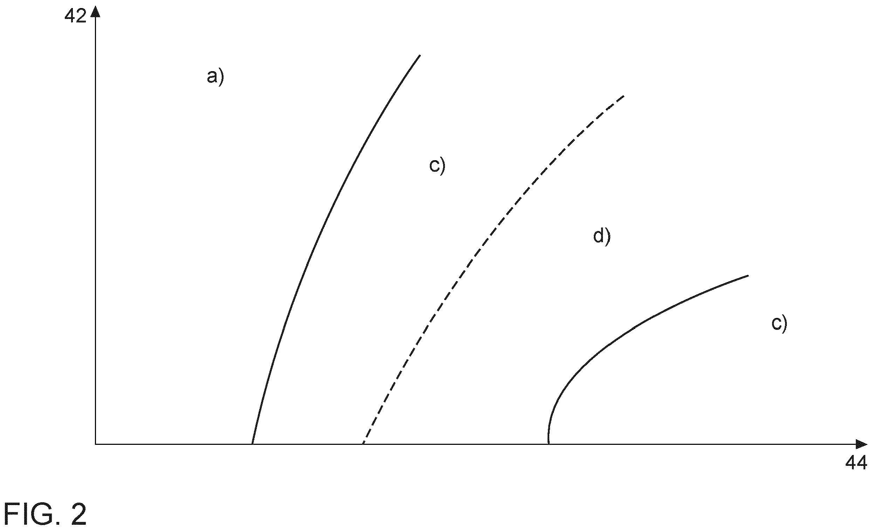

In diesem Zusammenhang zeigt Figur 2 eine schematische Darstellung einer Anwendung von Kriterien zur Auswahl einer Betriebsstrategie für das Klimatisierungssystem 12.

Auf der vertikalen Achse ist dabei eine Außenlufttemperatur 42 aufgetragen. Auf der horizontalen Achse ist ein Heizleistungsbedarf 44 aufgetragen.

Zu Vereinfachung wird eine Soll-Temperatur im Innenraum 36 des Fahrzeuges 10 als konstant betrachtet. Auch eine Außenluftfeuchte sowie eine Strömungsgeschwindigkeit eines Fluids im Außenluftwärmeübertrager 20 werden als konstant angenommen.

Das Diagramm zeigt nun qualitativ, wie unterschiedliche Betriebsstrategien a), b), c), d) exemplarisch ausgewählt werden können, um bei größtmöglicher Gesamteffizienz des Klimatisierungssystems 12 den Heizleistungsbedarf 44 zu decken.

Beispielsweise kann in dem Verfahren der Erfindung ermittelt werden, dass diese Kriterien im Bereich der Betriebsstrategien a) durch einen reinen Wärmepumpenbetrieb erfüllt werden können, ohne dass der Außenluftwärmeübertrager 20 vereist.

Weiterhin beispielsweise kann in dem Verfahren der Erfindung ermittelt werden, dass diese Kriterien im Bereich der Betriebsstrategie c) durch einen Wärmepumpenbetrieb in Kombination mit einem Betrieb der elektrischen Heizwärmequelle 32 erfüllt werden können, wobei der Außenluftwärmeübertrager 20 vereist. Betriebsstrategie c) ist in Figur 2 in zwei Bereichen des Diagramms gezeigt. Im vorderen, der vertikalen Achse näher gelegenen Bereich, also bei einem geringeren Heizleistungsbedarf 44, erfolgt die Abtauphase exemplarisch passiv, nachdem der Klimatisierungsbedarf entfallen ist. Im hinteren, von der vertikalen Achse weiter entfernt gelegenen Bereich, also bei einem höheren Heizleistungsbedarf 44, erfolgt die Abtauphase exemplarisch durch Umkehr des Wärmepumpenprozesses unter ergänzender Deckung des Heizleistungsbedarfs 44 mit der elektrischen Heizwärmequelle 32.

### Bezugszeichenliste

- 10: Fahrzeug
- 12: Klimatisierungssystem
- 14: Steuergerät
- 16: Elektrofahrzeug
- 18: Wärmepumpe
- 20: Außenluftwärmeübertrager
- 22: Motorraum
- 24: Kühlergrill
- 26: Innenluftwärmeübertrager
- 28: Ausströmkanal
- 30: weitere Heizwärmequelle
- 32: elektrische Heizwärmequelle
- 34: Luft
- 36: Innenraum
- 38: Außenluft
- 40: Zuluft
- 42: Außenlufttemperatur
- 44: Heizleistungsbedarf

## Patentansprüche

1. Verfahren zum Betrieb eines Klimatisierungssystems (12) für ein Fahrzeug (10), wobei das Klimatisierungssystem (12) umfasst:
- eine Wärmepumpe (18) mit einem Außenluftwärmeübertrager (20); und
- eine weitere Heizwärmequelle (30) für einen Innenraum (36) des Fahrzeuges (10); wobei
das Verfahren folgende Schritte umfasst:
- Ermittlung eines Heizleistungsbedarfs (44) zur Klimatisierung des Fahrzeuges (10);
- Ermittlung einer hierfür benötigten Wärmeleistungsaufnahme am Außenluftwärmeübertrager (20);
- Ermittlung eines Außenluftzustandes;
- Ermittlung einer im Außenluftwärmeübertrager (20) für die benötigte Wärmeleistungsaufnahme erforderlichen Fluidtemperatur;
- Ermittlung, ob ein Taupunkt der Außenluft (38) am Außenluftwärmeübertrager (20) bei der erforderlichen Fluidtemperatur unterschritten wird; und dann
- Auswahl einer Betriebsstrategie für das Klimatisierungssystem (12) anhand von Kriterien, die zumindest die Deckung des Heizleistungsbedarfs (44), die Außenlufttemperatur (42) und eine Gesamtenergieeffizienz des Klimatisierungssystems (12) umfassen, mittels eines Steuergerätes (14) des Fahrzeugs (10) aus einer Gruppe, die zumindest die folgenden Betriebsstrategien umfasst:
b) teilweise Deckung des Heizleistungsbedarfs (44) durch Betreiben der Wärmepumpe (18) mit einer Fluidtemperatur, bei der der Taupunkt nicht unterschritten wird, und ergänzende Deckung des Heizleistungsbedarfs (44) durch Betreiben der weiteren Heizwärmequelle (30);
c) temporäre teilweise Deckung des Heizleistungsbedarfs (44) durch Betreiben der Wärmepumpe (18) mit einer Fluidtemperatur, bei der der Taupunkt unterschritten wird, und ergänzende Deckung des Heizleistungsbedarfs (44) durch Betreiben der weiteren Heizwärmequelle (30), gefolgt von einer Abtauphase des Außenluftwärmeübertragers (20);
d) temporäre Deckung des Heizleistungsbedarfs (44) durch Betreiben der Wärmepumpe (18) mit einer Fluidtemperatur, bei der der Taupunkt unterschritten wird, gefolgt von einer Abtauphase des Außenluftwärmeübertragers (20);
- wobei die Betriebsstrategie mit der größten Gesamtenergieeffizienz, die den Heizleistungsbedarf deckt, ausgewählt wird.

2. Verfahren nach Anspruch 1, **dadurch gekennzeichnet, dass** die Gruppe als weitere Betriebsstrategie umfasst:
a) Deckung des Heizleistungsbedarfs (44) durch Betreiben der Wärmepumpe (18) mit einer Fluidtemperatur, bei der der Taupunkt nicht unterschritten wird.

3. Verfahren nach Anspruch 1 oder 2, **dadurch gekennzeichnet, dass** in Betriebsstrategie c) oder d) in der Abtauphase die Deckung des Heizleistungsbedarfs (44) durch Betreiben der weiteren Heizwärmequelle (30) erfolgt und für das Abtauen des Außenluftwärmeübertragers (20) Wärme der weiteren Heizwärmequelle (30) verwendet wird und dass zusätzlich ein Wärmepumpenprozess der Wärmepumpe (18) umgekehrt wird, wobei Wärme der weiteren Heizwärmequelle (30) der Kühlwirkung, die aus der Umkehr des Wärmepumpenprozesses resultiert, entgegenwirkt.

4. Verfahren nach einem der vorhergehenden Ansprüche, **dadurch gekennzeichnet, dass** in Betriebsstrategie c) anhand einer Benutzerinformation und eines Vereisungsmodells eine Simulation, eine prädiktive Regelung oder die Verwendung eines Kennfeldes erfolgt, wobei ermittelt wird, wann der Heizleistungsbedarf (44) entfällt, und dann eine teilweise Deckung des Heizleistungsbedarfs (44) durch Betreiben der Wärmepumpe (18) mit einer Fluidtemperatur erfolgt, bei der der Taupunkt unterschritten wird und eine ergänzende Deckung des Heizleistungsbedarfs (44) durch Betreiben der weiteren Heizwärmequelle (30) erfolgt, so dass diese Betriebsstrategie bis zum Entfall des Heizleistungsbedarfs (44) zu einer Maximierung der Gesamteffizienz führt.

5. Verfahren nach Anspruch 1, **dadurch gekennzeichnet, dass** in Betriebsstrategie c) oder d) anhand einer Benutzerinformation und eines Vereisungsmodells eine Simulation erfolgt, wann der Heizleistungsbedarf (44) entfällt, und eine Deckung des Heizleistungsbedarfs (44) bis zum Entfall des Heizleistungsbedarfs (44) durch Betreiben der Wärmepumpe (18) mit einer Fluidtemperatur erfolgt, bei der der Taupunkt unterschritten wird.

6. Verfahren nach einem der vorhergehenden Ansprüche, **dadurch gekennzeichnet, dass** die verwendete weitere Heizwärmequelle (30) eine elektrische Heizwärmequelle (32) umfasst.

7. Verfahren nach einem der vorhergehenden Ansprüche, **dadurch gekennzeichnet, dass** das verwendete Klimatisierungssystem (12) für ein Elektrofahrzeug (16) vorgesehen ist.

8. Steuergerät (14), eingerichtet zur Durchführung eines Verfahrens nach einem der Ansprüche 1 bis 7.

9. Fahrzeug (10), umfassend ein Klimatisierungssystem (12) mit einer Wärmepumpe (18), einem Außenluftwärmeübertrager (20) und eine weitere Heizwärmequelle (30) für einen Innenraum (36) des Fahrzeuges (10) sowie umfassend ein Steuergerät (14) nach Anspruch 8.

## Claims

1. Method for operating a climate control system (12) for a vehicle (10), wherein the climate control system (12) comprises:
- a heat pump (18) having an outside air heat exchanger (20); and
- a further heating source (30) for an interior (36) of the vehicle (10);
wherein
the method comprises the following steps:
- determining a heating power requirement (44) for the climate control of the vehicle (10);
- determining a required thermal power input at the outside air heat exchanger (20);
- determining an outside air condition;
- determining a fluid temperature in the outside air heat exchanger (20) that is necessary for the required thermal power input;
- determining whether the outside air (38) at the outside air heat exchanger (20) falls below a dew point at the necessary fluid temperature; and then
- selecting an operating strategy for the climate control system (12) on the basis of criteria which include at least meeting the heating power requirement (44), the outside air temperature (42) and an overall energy efficiency of the climate control system (12), by means of a control unit (14) of the vehicle (10) from a group which includes at least the following operating strategies:
b) meeting part of the heating power requirement (44) by operating the heat pump (18) at a fluid temperature which does not fall below the dew point, and meeting the rest of the heating power requirement (44) by operating the further heating source (30);
c) temporarily meeting part of the heating power requirement (44) by operating the heat pump (18) at a fluid temperature which falls below the dew point, and meeting the rest of the heating power requirement (44) by operating the further heating source (30), followed by a thawing phase of the outside air heat exchanger (20);
d) temporarily meeting the heating power requirement (44) by operating the heat pump (18) at a fluid temperature which falls below the dew point, followed by a thawing phase of the outside air heat exchanger (20);
- wherein the operating strategy having the greatest overall energy efficiency that meets the heating power requirement is selected.

2. Method according to claim 1, **characterized in that** the group comprises as a further operating strategy:
a) meeting the heating power requirement (44) by operating the heat pump (18) at a fluid temperature which does not fall below the dew point.

3. Method according to either claim 1 or claim 2, **characterized in that** in operating strategy c) or d), in the thawing phase, the heating power requirement (44) is met by operating the further heating source (30) and heat from the further heating source (30) is used for thawing the outside air heat exchanger (20),
**and in that,** in addition, a heat pump process of the heat pump (18) is reversed, heat from the further heating source (30) counteracting the cooling effect which results from the reversal of the heat pump process.

4. Method according to any of the preceding claims, **characterized in that** in operating strategy c), a simulation, a predictive control or the use of a characteristic map is carried out on the basis of user information and an icing model, it being determined when the heating power requirement (44) no longer applies, and then part of the heating power requirement (44) is met by operating the heat pump (18) at a fluid temperature which falls below the dew point and the rest of the heating power requirement (44) is met by operating the further heating source (30), so that this operating strategy leads to a maximization of the overall efficiency until the heating power requirement (44) no longer applies.

5. Method according to claim 1, **characterized in that** in operating strategy c) or d), a simulation is carried out on the basis of user information and an icing model when the heating power requirement (44) no longer applies, and the heating power requirement (44) is met until the heating power requirement (44) no longer applies by operating the heat pump (18) at a fluid temperature which falls below the dew point.

6. Method according to any of the preceding claims, **characterized in that** the further heating source (30) used comprises an electric heating source (32).

7. Method according to any of the preceding claims, **characterized in that** the climate control system (12) used is provided for an electric vehicle (16).

8. Control unit (14) designed to carry out a method according to any of claims 1 to 7.

9. Vehicle (10), comprising a climate control system (12) having a heat pump (18), an outside air heat exchanger (20) and a further heating source (30) for an interior (36) of the vehicle (10), and comprising a control unit (14) according to claim 8.

## Revendications

1. Procédé permettant le fonctionnement d'un système de climatisation (12) pour un véhicule (10), dans lequel le système de climatisation (12) comprend :
- une pompe à chaleur (18) comportant un échangeur de chaleur d'air extérieur (20) ; et
- une autre source de chaleur de chauffage (30) pour un espace intérieur (36) du véhicule (10) ; dans lequel
le procédé comprend les étapes suivantes :
- détermination d'un besoin en puissance de chauffage (44) pour la climatisation du véhicule (10);
- détermination d'une puissance thermique absorbée nécessaire à cet effet sur l'échangeur de chaleur d'air extérieur (20) ;
- détermination d'un état de l'air extérieur ;
- détermination d'une température de fluide nécessaire dans l'échangeur de chaleur d'air extérieur (20) pour la puissance thermique absorbée requise ;
- détermination établissant si un point de rosée de l'air extérieur (38) est dépassé vers le bas au niveau de l'échangeur de chaleur d'air extérieur (20) à la température de fluide requise ; et ensuite
- sélection d'une stratégie de fonctionnement pour le système de climatisation (12) à l'aide de critères qui comprennent au moins la couverture du besoin en puissance de chauffage (44), la température de l'air extérieur (42) et une efficacité énergétique globale du système de climatisation (12), à l'aide d'un appareil de commande (14) du véhicule (10) parmi un groupe qui comprend au moins les stratégies de fonctionnement suivantes :
b) couverture partielle du besoin en puissance de chauffage (44) par le fonctionnement de la pompe à chaleur (18) avec une température de fluide à laquelle le point de rosée n'est pas dépassé vers le bas, et couverture complémentaire du besoin en puissance de chauffage (44) par le fonctionnement de l'autre source de chaleur de chauffage (30) ;
c) couverture partielle temporaire du besoin en puissance de chauffage (44) par le fonctionnement de la pompe à chaleur (18) avec une température de fluide à laquelle le point de rosée est dépassé vers le bas, et couverture complémentaire du besoin en puissance de chauffage (44) par le fonctionnement de l'autre source de chaleur de chauffage (30), suivie d'une phase de dégivrage de l'échangeur de chaleur d'air extérieur (20) ;
d) couverture temporaire du besoin en puissance de chauffage (44) par le fonctionnement de la pompe à chaleur (18) à une température de fluide à laquelle le point de rosée est dépassé vers le bas, suivie d'une phase de dégivrage de l'échangeur de chaleur d'air extérieur (20) ;
- dans lequel la stratégie de fonctionnement présentant la meilleure efficacité énergétique globale couvrant le besoin en puissance de chauffage est sélectionnée.

2. Procédé selon la revendication 1, **caractérisé en ce que** le groupe comprend en tant que stratégie de fonctionnement supplémentaire :
a) couverture du besoin en puissance de chauffage (44) par le fonctionnement de la pompe à chaleur (18) à une température de fluide à laquelle le point de rosée n'est pas dépassé vers le bas.

3. Procédé selon la revendication 1 ou 2, **caractérisé en ce que,** dans la stratégie de fonctionnement c) ou d), pendant la phase de dégivrage, la couverture du besoin en puissance de chauffage (44) s'effectue par le fonctionnement de l'autre source de chaleur de chauffage (30) et, pour le dégivrage de l'échangeur de chaleur d'air extérieur (20), la chaleur de l'autre source de chaleur de chauffage (30) est utilisée **et en ce qu'**en outre, un processus de pompe à chaleur de la pompe à chaleur (18) est inversé, dans lequel la chaleur de l'autre source de chaleur de chauffage (30) s'oppose à l'effet de refroidissement qui résulte de l'inversion du processus de pompe à chaleur.

4. Procédé selon l'une des revendications précédentes,
**caractérisé en ce que** dans la stratégie de fonctionnement c), à l'aide d'une information utilisateur et d'un modèle de givrage, une simulation, une régulation prédictive ou l'utilisation d'un diagramme caractéristique est effectuée, dans lequel il est déterminé quand le besoin en puissance de chauffage (44) disparaît, puis une couverture partielle du besoin en puissance de chauffage (44) est effectuée par le fonctionnement de la pompe à chaleur (18) avec une température de fluide à laquelle le point de rosée est dépassé vers le bas et une couverture complémentaire du besoin en puissance de chauffage (44) est effectuée par le fonctionnement de l'autre source de chaleur de chauffage (30), de sorte que cette stratégie de fonctionnement conduit à une maximisation de l'efficacité globale jusqu'à la disparition du besoin en puissance de chauffage (44).

5. Procédé selon la revendication 1, **caractérisé en ce que** dans la stratégie de fonctionnement c) ou d), une simulation est effectuée à l'aide d'une information d'utilisateur et d'un modèle de givrage pour déterminer quand le besoin en puissance de chauffage (44) disparaît, et une couverture du besoin en puissance de chauffage (44) jusqu'à la disparition du besoin en puissance de chauffage (44) est effectuée par le fonctionnement de la pompe à chaleur (18) à une température de fluide à laquelle le point de rosée est dépassé vers le bas.

6. Procédé selon l'une des revendications précédentes,
**caractérisé en ce que** l'autre source de chaleur de chauffage (30) utilisée comprend une source de chaleur de chauffage électrique (32).

7. Procédé selon l'une des revendications précédentes,
**caractérisé en ce que** le système de climatisation (12) utilisé est prévu pour un véhicule électrique (16).

8. Appareil de commande (14) conçu pour l'exécution d'un procédé selon l'une des revendications 1 à 7.

9. Véhicule (10), comprenant un système de climatisation (12) comportant une pompe à chaleur (18), un échangeur de chaleur d'air extérieur (20) et une autre source de chaleur de chauffage (30) pour un espace intérieur (36) du véhicule (10) ainsi que comprenant un appareil de commande (14) selon la revendication 8.
